Europäisches Patentamt

(19) European Patent Office

Office européen des brevets

(11) Numéro de publication : **0 246 163 B1**

(12) # FASCICULE DE BREVET EUROPEEN

(45) Date de publication du fascicule du brevet :
21.08.91 Bulletin 91/34

(51) Int. Cl.⁵ : **A23C 19/032**

(21) Numéro de dépôt : **87401099.4**

(22) Date de dépôt : **15.05.87**

(54) Procédé de traitement du lait en vue de l'obtention de fromages.

(30) Priorité : **15.05.86 FR 8607002**

(43) Date de publication de la demande :
**19.11.87 Bulletin 87/47**

(45) Mention de la délivrance du brevet :
**21.08.91 Bulletin 91/34**

(84) Etats contractants désignés :
**AT BE CH DE ES FR GB GR IT LI LU NL SE**

(56) Documents cités :
**EP-A- 0 150 743**
**JOURNAL OF DAIRY RESEARCH, vol. 43, no. 2, 1976, pages 301-311; B.A. LAW et al.: "The contribution of starter streptococci to flavour development in Cheddar cheese"**
**MILCHWISSENSCHAFT, vol. 39, no. 3, 1984, pages 136-139; R.S.-T. YU et al.: "Conditions for the production and regeneration of protoplasts from lactic streptococci"**

(56) Documents cités :
**JOURNAL OF DAIRY SCIENCE, vol. 65, 1982, pages 1428-1431; J.K. KONDO et al.: "Mutanolysin for improved lysis and rapid protoplast formation in dairy streptococci"**
**CHEMISCHES ZENTRALBLATT, no. 34, 1964, page 269, no. 2717; W. ALEXEJEW: "Hydrolysierter bakterieller Säurewecker und seine Anwendung bei der Käsebereitung", & MILCH-IND. (USSR) 24, Nr. 5, 11-16, 1963**

(73) Titulaire : **SANOFI ELF BIO INDUSTRIES**
**Société Anonyme:**
**40, avenue George V**
**F-75008 Paris (FR)**

(72) Inventeur : **Lagarde, Gilles**
**9, cour Debille**
**F-75011 Paris (FR)**

(74) Mandataire : **Gillard, Marie-Louise et al**
**Cabinet Beau de Loménie 55, Rue d'Amsterdam**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de traitement du lait en vue de l'obtention de fromages.

L'invention trouve son application dans les industries alimentaires et notamment l'industrie fromagère.

Il est connu que la fabrication traditionnelle d'un fromage résulte de la coagulation du lait sous l'effet d'une enzyme - la présure - et de l'acide lactique provenant de la transformation du lactose par les bactéries lactiques, suivie de l'égouttage par synérèse du caillé obtenu (Techniques laitières, R. VEISSEYRE - La Maison Rustique - 1965 - PARIS - FRANCE).

Le fromage ainsi préparé est ensuite soumis à une très courte phase de maturation enzymatique, au cours de laquelle principalement les enzymes des bactéries lactiques, contenues ou introduites dans le lait avant transformation, exercent leur activité conduisant à l'apparition de précurseurs d'arômes et d'arômes ; le fromage ainsi maturé est qualifié de "fromage frais". Le fromage peut ensuite être soumis à une phase de maturation enzymatique prolongée, connue sous le terme d'affinage, au terme de laquelle un fromage affiné est obtenu.

La fabrication traditionnelle des fromages affinés est susceptible de nombreuses variations. La coagulation peut être à prédominance présure ou à prédominance lactique ou encore mixte. L'égouttage peut être spontané ou accéléré par différents moyens (découpage, brassage, cuisson, pression, broyage). L'affinage lui-même varie selon la nature des micro-organismes dont on favorise le développement. Ces variations déterminent l'obtention des différents types de fromages connus que l'on peut regrouper en fromages à pâte molle dont le camembert est un exemple, en fromages à pâte pressée dont le cantal et le cheddar sont des exemples, en fromages à pâte cuite dont le gruyère de comté est un exemple, et en fromages à pâte persillée avec développement d'une moisissure interne dont le roquefort est un exemple.

Il est également connu qu'il est possible de fabriquer des fromages en soumettant le lait, préalablement écrémé, à un traitement préalable d'ultrafiltration (J.L. MAUBOIS et al., Le Lait/SEPTEMBRE-OCTOBRE 1971/N° 508) qui permet en fait d'effectuer l'opération d'égouttage avant même que l'on ne procède à la coagulation du lait. Cette ultrafiltration conduit à l'obtention de deux liquides : l'ultrafiltrat ou perméat qui traverse la membrane d'ultrafiltration et le rétentat qui est un lait enrichi en protéines (caséines et protéines solubles).

Ce rétentat mélangé à de la crème constitue un pré-fromage liquide qui, après ensemencement bactérien, emprésurage et moulage, conduit à l'obtention d'un caillé que l'on peut soumettre à un affinage. Cette technique est bien adaptée à la fabrication de fromages à pâte molle et de fromages à pâte ferme de type saint-paulin (P. DUCRUET et al., La Technique Laitière No. 957 - septembre 1981).

L'affinage du caillé est un processus très complexe au cours duquel les fromages subissent une maturation enzymatique destinée à développer leur saveur tout en modifiant leur aspect, leur texture et leur consistance. Ce processus résulte de l'action d'enzymes exerçant leur action sur les protéines et les lipides, principaux constituants du caillé.

La protéolyse et, dans certains cas, la lipolyse semblent être en effet les deux phénomènes biochimiques fondamentaux dont dépend le degré de modification de texture et de développement de l'arôme de la pâte d'un fromage pendant son affinage.

Il est connu que les enzymes qui participent à l'affinage du caillé sont essentiellement apportées par les micro-organismes intervenant au fur et à mesure de l'évolution dudit caillé en cours d'affinage. Il est clair que les microorganismes contenus initialement dans le lait et non éliminés par un traitement thermique du lait, ou apportés par un ensemencement exogène sous forme d'un levain bactérien [bactéries lactiques (genre Lactobacillus, Leuconostoc et Streptococcus), bactéries alcalinisantes du groupe coryneforme (genre Arthrobacter et Bacterium (B. linens)), bactéries propioniques (genre Propionibacterium), micrococques (genre Micrococcus)] ou d'un levain fongique, en début de fabrication, jouent à cet égard un rôle primordial.

L'affinage est un processus généralement lent puisqu'il peut être, pour un fromage à égouttage spontané et à coagulation rapide tel qu'un camembert, de trois semaines, pour un fromage dit à égouttage accéléré sans cuisson tel que le cantal, de quatre mois, et pour un fromage à égouttage accéléré avec cuisson tel que le parmesan, de deux ans. Il s'est donc avéré avantageux de réduire le temps d'affinage.

Plusieurs solutions ont été à ce jour proposées.

Il est ainsi connu que l'on peut accélérer l'affinage d'un fromage par un apport exogène d'enzymes. Des lipases d'origine animale (présures en pâte traditionnelles fabriquées à partir du contenu d'estomacs de chevreau ou d'agneau ou préparations contenant des estérases prégastriques ou d'origine fongique (extraites par exemple de Mucor Miehei))sont notamment utilisées pour la production de fromages italiens à pâte ferme pressée et à goût piquant tels que le provolone, l'asiago ou le romano. L'utilisation de protéases et de peptidases microbiennes (issues par exemple des genres bactérien Bacillus et fongique Aspergillus) purifiées ou sous forme d'un extrait cellulaire a également été préconisée.

De même il est connu [DILANIAN Z. et al., Milchwissenschaft, 31 : 217 (1976)] que l'utilisation de bactéries lactiques mutantes sélectionnées pour leurs activités enzymatiques, protéolytiques en particulier, élevées permet une accélération notable de l'affinage.

Il est encore connu [PETERSON, H.E. et al., J. DAIRY Res. 42 : 313 (1975)] qu'une augmentation du nombre des bactéries lactiques dans le caillé peut contribuer à accélérer l'affinage. Le rôle joué par les streptocoques lactiques dans la formation de petits peptides et d'acides aminés a été clairement démontré en ce qui concerne l'affinage des fromages à pâte pressée cuite. Il est également désormais établi que de petits peptides et des acides aminés jouent le rôle de précurseurs d'arômes dans le fromage et qu'une accélération de l'apparition de ces précurseurs et, par conséquent, de la formation de l'arôme peut être obtenue par une augmentation du nombre de bactéries lactiques dans le caillé par un ensemencement exogène en début de fabrication.

Toutefois, chacune des techniques expérimentées pour accélérer l'affinage s'accompagne d'inconvénients souvent majeurs. C'est ainsi que l'utilisation d'enzymes est aléatoire. L'utilisation de protéases ou de peptidases peut en effet avoir pour corollaire l'apparition de goûts amers. Le choix des enzymes (lipases et protéases) doit faire l'objet d'une sélection, tenant compte de leur spécificité, parfois difficile à déterminer. Leur incorporation en cours de fabrication est malaisée : leur addition au lait en cuve, avant emprésurage, entraîne des pertes importantes dans les sérums et leur addition au caillé non seulement modifie les propriétés rhéologiques de celui-ci, mais aussi est défavorable à leur répartition homogène. De même, le développement de l'affinage à l'aide de bactéries lactiques mutantes est limité en raison de l'apparition de goûts amers. Enfin, l'accélération de l'affinage par augmentation du nombre de bactéries lactiques dans le caillé est difficile d'emploi car pareille augmentation peut modifier sensiblement la technologie habituelle de la fabrication et conduire à la production de fromages atypiques.

La demanderesse a précisément conçu et réalisé un procédé de traitement du lait qui permet, dans le cas de la fabrication d'un fromage frais, d'exacerber la production de précurseurs d'arômes et d'arômes au sein du fromage et, dans le cas de la fabrication d'un fromage affiné, d'accélérer l'affinage, tout en palliant aux défauts inhérents aux techniques de l'art antérieur.

Le procédé selon l'invention se fonde sur un ensemencement à l'aide de protoplastes bactériens, du lait préparé en vue d'une fabrication fromagère avant que ne lui soit ajoutée la présure.

L'ensemencement du lait à l'aide de protoplastes permet l'obtention de fromages frais ou affinés. Selon leur richesse en précurseurs d'arômes et arômes, leur degré d'affinage et notamment leur aspect, ces fromages peuvent être consommés en tant que tels ou être ajoutés à une préparation alimentaire en cours d'élaboration pour laquelle ils constituent un substrat riche en arômes ou en précurseurs d'arômes.

Ce procédé s'applique au traitement du lait quelle qu'en soit l'origine. On entend précisément donner ici au mot "lait" une signification large. Il peut s'agir, dans le cadre d'une fabrication fromagère traditionnelle, d'un lait cru qui sera utilisé tel quel ou d'un lait qui a subi un traitement thermique de pasteurisation préalable. De préférence, ce lait aura été préalablement écrémé, si le procédé de fabrication prévoit une phase d'écrémage partiel ou total. Il peut également s'agir, dans le cadre d'une fabrication fromagère faisant appel à une ultrafiltration, du rétentat.

Les protoplastes mis en oeuvre sont préparés à partir des bactéries participant à l'affinage des fromages. Il peut s'agir notamment de bactéries habituellement regroupées sous la dénomination "bactéries lactiques", parmi lesquelles on peut classer les genres <u>Lactobacillus</u>, <u>Leuconostoc</u> et <u>Streptococcus</u> ; il peut s'agir également de bactéries alcalinisantes du groupe coryneforme parmi lesquelles, le genre <u>Arthrobacter</u> et l'espèce <u>Bacterium linens</u> jouent un rôle déterminant ; il peut encore s'agir de microcoques ou de bactéries propioniques dont l'action est bien connue pour les fromages présentant des ouvertures internes, tels que le gruyère de comté, et représentées essentiellement par le genre <u>Propionibacterium</u>.

Le choix des protoplastes est déterminé par la fabrication fromagère recherchée. Il est à noter que des protoplastes issus de ferments lactiques pourront être mis en oeuvre avantageusement pour toutes les fabrications fromagères étant donné la participation des bactéries lactiques à tous les processus d'affinage. Ils conviennent tout particulièrement à l'obtention de fromages à pâte molle et notamment de camembert.

La préparation des protoplastes est réalisée selon les techniques connues de l'art antérieur. Elle consiste à éliminer la paroi bactérienne. Ce résultat peut être atteint grâce, notamment, à l'emploi de lysozyme. On pourra par exemple procéder comme il est indiqué ci-dessous.

Une préparation très riche en bactéries dont le nombre atteint peut correspondre à $10^{11}$ ou même $10^{12}$ germes revivifiables par gramme est fabriquée à partir de la ou des souches bactériennes d'intérêt. Cette préparation peut se présenter sous diverses formes. Elle peut être congelée ou lyophilisée par exemple. La forte teneur en bactéries peut être obtenue à l'aide de traitements tels qu'une ultrafiltration ou une ultracentrifugation.

Cette préparation est ensuite utilisée pour ensemencer de l'eau bactériologiquement propre maintenue à 37°C au moyen d'un chauffage approprié (la stérilisation absolue n'est pas nécessaire) et qui, avantageusement, a une concentration en éléments minéraux peu élevée (par exemple une concentration en ions Na+ inférieure à 0,3 M). L'inoculation de l'eau est réalisée de manière à obtenir une suspension renfermant de $10^9$ à

$10^{14}$ (selon l'intensité de l'effet désiré) protoplastes par litre lorsque l'on envisage d'ajouter cette suspension au lait à raison d'une partie de suspension pour cent parties de lait. Après addition des bactéries, l'eau est agitée de façon à favoriser leur répartition homogène.

Du lysozyme est alors apporté, avantageusement sous forme de chlorhydrate, en quantité telle que l'on ait une concentration équivalente à 0,5 mg/ml de la préparation de lysozyme standard de la Fédération Internationale Pharmaceutique (CENTER FOR STADARDS - WOLTERSLAAN 16 - 9000 GENT - BELGIQUE) dont l'activité correspond à 37600 unités F.I.P/mg et ci-après désignée "lysozyme FIP".

Après homogénéisation, par agitation, de la suspension bactérienne, le pH est ajusté à une valeur de préférence comprise entre 7 et 8. Il est enfin procédé à une incubation d'environ 20 minutes à 37°C qui permet au lysozyme d'exercer son action enzymatique sur la paroi bactérienne et conduit à l'obtention d'une suspension de protoplastes. Il convient de noter que l'application de ce procédé à des bactéries lactiques conduit à l'obtention de protoplastes qui ont perdu le pouvoir acidifiant, caractéristique des bactéries dont ils sont issus.

La suspension de protoplastes peut être stabilisée pour un emploi différé notamment :
– par l'incorporation, à la suspension de protoplastes d'un stabilisant osmotique tels que du saccharose, ou du lactose, à la concentration de 0,5 M,
par reconstitution à l'aide de ladite suspension de protoplastes et de lait écrémé en poudre, d'un lait dont la pression osmotique est très voisine de celle du contenu intracellulaire des protoplastes.

A moins d'une telle stabilisation, la suspension de protoplastes doit être utilisée dans un délai qui ne doit pas dépasser 30 minutes, comptées à partir de l'adjonction du lysozyme à la suspension bactérienne.

A cet effet, la suspension de protoplastes est ajoutée au lait, au niveau de la cuve de fabrication, avant l'emprésurage, en quantité telle que le lait contienne de $10^8$ à $10^{13}$ protoplastes par litre et de préférence $10^{10}$ à $10^{11}$ protoplastes par litre.

Avantageusement, le lait ainsi ensemencé est soumis à une agitation permettant une répartition homogène des protoplastes dans la cuve. La fabrication se poursuit ensuite normalement.

Un grand avantage apporté par l'utilisation de tels protoplastes est leur lyse progressive qui est échelonnée dans le temps. En effet, la lyse intervient quand la concentration en chlorure de sodium de la phase aqueuse du caillé devient supérieure à environ 0,3 M (soit supérieure à environ 17,5 g/l) après le salage des fromages; cette concentration n'est pas atteinte simultanément pour toutes les zones du fromage et il existe un gradient de concentration en chlorure de sodium de la surface vers le centre du fromage. La lyse des protoplastes se fait donc progressivement, de la périphérie du fromage vers son centre, et ce d'autant plus rapidement que le fromage est de petit format. C'est ainsi que, par exemple, la concentration de 17,5 g/l de sel dans la phase aqueuse de la pâte peut être atteinte, au centre d'un camembert, en 48 heures.

L'utilisation de protoplastes lors de la fabrication de fromages telle qu'envisagée est d'autant plus avantageuse que, contrairement aux bactéries elles-mêmes, lesdits protoplastes sont insensibles aux bactériophages qui se fixent habituellement au niveau de récepteurs situés à la surface de la paroi bactérienne. Les protoplastes issus de bactéries lactiques perdant le pouvoir acidifiant caractéristique desdites bactéries, cela permet leur utilisation sans courir le risque d'une acidification excessive.

L'invention va être maintenant exemplifiée. Elle ne se limite pas, bien entendu, aux modes d'application, ici plus particulièrement envisagés, mais elle en embrasse au contraire toutes les variantes dans le cadre des revendications.

Exemple :

Fabrication, selon un mode traditionnel, de camembert à partir de lait préalablement ensemencé avec une suspension de protoplastes.

I - PROTOCOLE EXPERIMENTAL

1.1. preparation du lait :

Du lait ajusté à 26 g de matière grasse par litre est préensemencé à raison de 0,2‰ (volume à volume) de ferments mésophiles (S.cremoris, S.lactis S.diacetylactis et Leuconostoc cremoris).Après une maturation à 10°C pendant 18h, on procède à l'ensemencement proprement dit, à l'aide des mêmes ferments, à raison de 1% (volume à volume).

Ce lait ainsi préparé est réparti en bassines,contenant 84 litres chacune, qui sont alors placées à 34°C pendant 3h.

Les bassines sont alors réparties en quatre lots : A,B,C et D.

1.2. Préparation de trois suspensions de protoplastes :

a) Les cultures bactériennes mises en oeuvre :

Chaque suspension de protoplastes est préparée à partir de l'une des trois cultures lyophilisées de ferments lactiques suivantes :
- culture d'une souche de Streptococcus cremoris
- culture d'une souche de Streptococcus lactis
- culture d'un mélange d'une souche de Streptococcus cremoris et d'une souche de Streptococcus lactis.

Ces cultures se présentent sous la forme d'un lyophilisat et contiennent $5.10^{11}$ bactéries revivifiables par gramme.

De telles cultures peuvent notamment être obtenues auprès de la société EUROZYME (PARIS-FRANCE).

b) protocole pour la préparation d'un litre de suspension :

. 1 l d'eau (non distillée) est autoclave 30 min à 90°C et ramené à 37°C.
. 1 g de culture lyophilisée est dispersé dans l'eau. La suspension ainsi obtenue contient 0,5 g (en poids sec) de cellules par litre.
. 0,5 g d'une préparation de chlorhydrate de lysozyme titrant au minimum 98% du lysozyme F.I.P. est ajouté.
. le pH est ajusté à environ 8.
. la suspension ainsi préparée est placée à 37°C pendant 15 min.

L'efficacité de la protoplastisation a été vérifiée en ensemençant dans la masse, aux temps t=0 (adjonction du lysozyme) et t=15 min (fin de l'incubation), et à l'aide de 0,1 ml de la suspension cellulaire, un milieu de culture ayant les caractéristiques du milieu M17. C'est un milieu sélectif pour les streptocoques ; non protecteur pour les protoplastes, il ne permet donc pas leur développement. Il a été décrit par TERZAGHI et SANDINE (Appl. Microbiol. 29, 807-813 (1975))Les dénombrements des colonies visibles après une incubation de 48 h à 37°C indiquent qu'au temps t=15 min le nombre de bactéries intactes a diminué dans un rapport moyen de $1/10^6$ par rapport au temps t=0.

1.3. Ensemencement du lait à l'aide des suspensions de protoplastes :

Chaque bassine des lots A, B, et C reçoit 1 l de l'une des suspensions de protoplastes préparées selon 1.2. (la suspension de protoplastes de Streptococcus cremoris pour le lot A, la suspension de protoplastes de Streptococcus lactis pour le lot B, et la suspension de protoplastes d'un mélange de Streptococcus cremoris et de Streptococcus lactis pour le lot C).

Les bassines du lot D ne reçoivent pas de protoplastes ; elles sont destinées à servir de témoin.

1.4. Traitement du lait ensemencé :

Le lait ensemencé selon 1.3. est ensuite emprésuré. A cet effet, on verse dans chaque bassine 14 ml d'une présure (Laboratoires GRANDAY-FRANCE) contenant 570 mg de chymosine par litre.

Sous l'action de la présure, le lait coagule et se prend en masse ; le caillé ainsi obtenu est tranché puis disposé dans des moules. On laisse l'égouttage s'effectuer d'une manière spontanée, en réalisant deux retournements. Au bout de 24 heures, on procède au démoulage et les fromages reçoivent en surface, par pulvérisation, une suspension dans l'eau distillée de spores de Penicillium candidum. Quatre heures plus tard, les fromages sont trempés rapidement dans une saumure. Les fromages sont ensuite transportés dans les locaux d'affinage à 13°C et dont l'air a un degré hygrométrique égal à 90% d'humidité relative. L'affinage est ainsi poursuivi pendant 13 jours. Le 14e jour,les fromages sont emballés et placés à 7°C.

## II - RESULTATS

Différentes mesures ont été faites sur des échantillons de fromage prélevés à différents moments de la fabrication, soit, J1 étant le jour où est entreprise la fabrication :
- Jour J1, après saumurage,
- Jour J7,
- Jour J13, au moment de l'emballage,
- Jour J21,

et
– Jour J35.

## 2.1. Influence de l'adjonction de protoplastes sur la préparation des fromages pendant les phases de coagulation et d'égouttage du caillé :

Aucune différence n'a été observée entre les paramètres mesurés à partir des laits et des caillés issus des lots de bassines A,B et C et les paramètres mesurés à partir du lait et du caillé issus du lot-temoin D.

Les temps de coagulation, en particulier, sont identiques.

Les courbes d'acidification sont semblables ; les pH au démoulage sont très voisins :

pH au démoulage

| | |
|---|---|
| Lot A | 4,77 |
| Lot B | 4,78 |
| Lot C | 4,80 |
| Lot D | 4,75 |

Les valeurs de pH ainsi obtenues rendent compte de la perte par les bactéries protoplastisées de leur pouvoir acidifiant.

## 2.2. Influence de l'adjonction des protoplastes sur l'affinage :

Deux indices de protéolyse ont été mesures. Des tests organoleptiques ont, également, été pratiqués.

### a) Appréciation de la protéolyse, à l'aide d'indices.

Les teneurs en azote protéique total (NT), en azote protéique soluble (NS) et en azote non protéique(NNP) ont été mesurées [LENOIR J., Le Lait, 43, 154-165 (1963)] et leurs rapports $\frac{NS}{NT}$ et $\frac{NNP}{NT}$, qui constituent des indices du degré de la protéolyse (plus les rapports sont élevés, plus forte a été la protéolyse), ont été calculés.

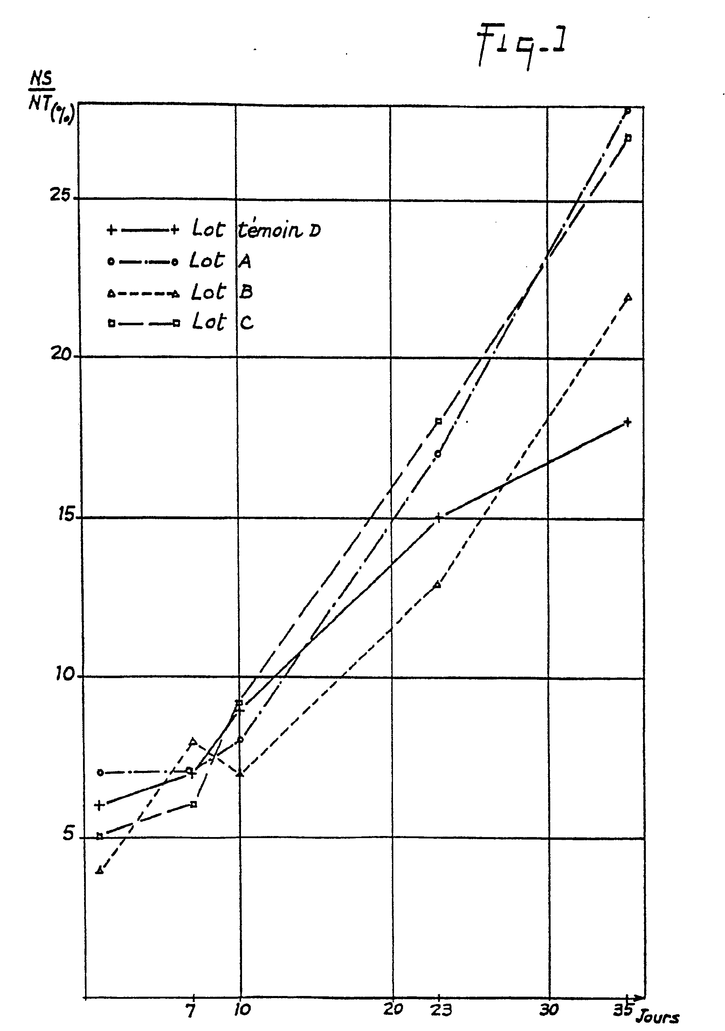

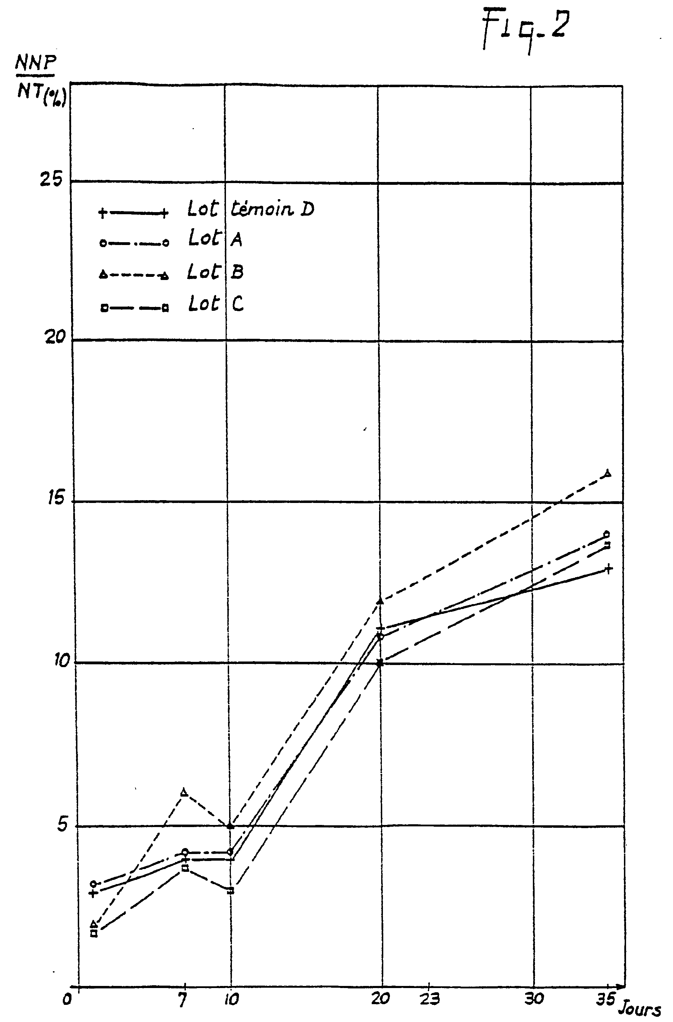

Le tableau No. 1 et les figures No. 1 (évolution de l'indice $\frac{NS}{NT}$ en fonction du temps), et No. 2 (évolution de l'indice $\frac{NNP}{NT}$ en fonction du temps) présentent ces résultats.

Ils font apparaître un rapport $\frac{NS}{NT}$ nettement plus élevé pour les fromages ayant reçu des protoplastes, à partir du 15e jour (J15) pour les lots A et C et à partir du 27e jour (J27) pour le lot B.

Des écarts, bien que moins marqués, sont également constatés en ce qui concerne les rapports $\frac{NNP}{NT}$.

### b) Tests organoleptiques.

Un jury de cinq personnes a attribué une note de 0 à 4 pour exprimer :
– une appréciation visuelle du degré d'affinage,
– une appréciation gustative du degré d'affinage,
et
– une appréciation globale de la qualité des fromages.

Le tableau No. 2 présente les résultats de ces tests, chaque note représente la moyenne des cinq notes attribuées.

Les résultats de ces tests organoleptiques montrent que les dégustateurs perçoivent clairement les différents degrés d'affinage des fromages et l'intensification de l'affinage obtenue par l'apport des protoplastes au lait. Cela est particulièrement net pour le lot C dont la pâte coulait littéralement, ce qui lui a valu une mauvaise note d'appréciation globale de la qualité, mais de bonnes notes quant à l'appréciation de son degré d'affinage.

## III - CONCLUSION

L'ensemble des résultats ci-dessus présentés indique clairement que la mise en oeuvre du procédé selon l'invention pour la fabrication d'un fromage de type camembert permet une intensification de l'affinage qui peut être appréciable dès le 15e jour (J15) de la fabrication.

TABLEAU No. 1

Indices de protéolyse aux différents stades de prélèvement.

| | | Lot D (témoin) | Lot A | Lot B | Lot C |
|---|---|---|---|---|---|
| Après | $\frac{NS}{NT}$ | 0,06 | 0,07 | 0,04 | 0,05 |
| salage | $\frac{NNP}{NT}$ | 0,03 | 0,03 | 0,02 | 0,02 |
| J 7 | $\frac{NS}{NT}$ | 0,07 | 0,07 | 0,08 | 0,06 |
| | $\frac{NNP}{NT}$ | 0,04 | 0,04 | 0,06 | 0,04 |
| J 10 | $\frac{NS}{NT}$ | 0,09 | 0,08 | 0,07 | 0,09 |
| | $\frac{NNP}{NT}$ | 0,04 | 0,04 | 0,05 | 0,03 |
| J 23 | $\frac{NS}{NT}$ | 0,15 | 0,17 | 0,13 | 0,18 |
| | $\frac{NNP}{NT}$ | 0,11 | 0,11 | 0,12 | 0,10 |
| J 35 | $\frac{NS}{NT}$ | 0,18 | 0,28 | 0,22 | 0,27 |
| | $\frac{NNP}{NT}$ | 0,13 | 0,14 | 0,16 | 0,14 |

TABLEAU No. 2

| | Lot D(temoin) | | Lot A | | Lot B | | Lot C | |
|---|---|---|---|---|---|---|---|---|
| | J23 | J35 | J23 | J35 | J23 | J35 | J23 | J35 |
| Appréciation globale de la qualité | 1,75 | 1,7 | 2 | 3 | 2,25 | 1,7 | 2,25 | 1 trop affiné |
| Appréciation visuelle du degré d'affinage | 1 | 1,5 | 2 | 2,25 | 2,25 | 2,5 | 1,75 | 3 |
| Appréciation gustative du degré d'affinage | 1,3 | 2,3 | 1 | 2,7 | 1,25 | 2 | 1,75 | 3 |

## Revendications

1. Procédé de traitement du lait en vue de l'obtention de fromages caractérisé en ce qu'avant emprésurage le lait est ensemencé à l'aide de protoplastes bactériens.

2. Procédé selon la revendication 1, caractérisé en ce que le lait est traité par les méthodes de fabrication fromagère traditionnelle.

3. Procédé selon la revendication 1, caractérisé en ce que le lait est constitué par un rétentat d'ultrafiltration.

4. Procédé selon l'une quelconque des revendications 1 à 3, caractérisé en ce que les protoplastes mis en oeuvre sont préparés à partir de bactéries lactiques.

5. Procédé selon l'une quelconque des revendications 1 à 4 pour la fabrication de fromages affinés.

6. Procédé selon l'une quelconque des revendications 1 à 5 mis en oeuvre en vue de l'obtention d'un fromage à pâte molle de type camembert, caractérisé en ce qu'on ajoute avant emprésurage une quantité de protoplastes de bactéries lactiques telle que le lait ensemencé contienne de $10^8$ à $10^{13}$ protoplastes par litre de lait.

## Claims

1. Process for the treatment of milk with a view to making cheese, characterized in that the milk is inoculated with bacterial protoplasts before rennet is added.

2. Process according to claim 1, characterized in that the milk is treated by the traditional cheesemaking methods.

3. Process according to claim 1, characterized in that the milk is constituted by an ultrafiltration residue.

4. Process according to any one of claims 1 to 3, characterized in that the protoplasts used are prepared from lactic bacteria.

5. Process according to any one of claims 1 to 4 for the manufacture of ripe cheese.

6. Process according to any one of claims 1 to 5, used for making a soft cheese of camembert type, characterized in that protoplasts from lactic bacteria are added, before addition of rennet, in an amount such that the inoculated milk contains from $10^8$ to $10^{13}$ protoplasts per liter of milk.

**Patentansprüche**

1. Verfahren zur Behandlung von Milch für die Gewinnung von Käse, dadurch gekennzeichnet, daß die Milch vor der Labzusetzung mit bakteriellen Protoplasten beimpft wird.

2. Verfahren nach Anspruch 1, dadurch gekennzeichnet, daß die Milch mittels Verfahren der traditionellen Käseherstellung behandelt wird.

3. Verfahren nach Anspruch 1, dadurch gekennzeichnet, daß die Milch aus einem Ultrafiltrationsretentat besteht.

4. Verfahren nach einem der Ansprüche 1 bis 3, dadurch gekennzeichnet, daß die zum Einsatz gelangenden Protoplasten aus Milchbakterien bereitet werden.

5. Verfahren nach einem der Ansprüche 1 bis 4 zur Herstellung von reifen Käsen.

6. Verfahren nach einem der Ansprüche 1 bis 5 für die Gewinnung eines Weichkäses der Type Camembert, dadurch gekennzeichnet, daß man vor der Labzusetzung eine derartige Menge an Milchbakterienprotoplasten zugibt, daß die beimpfte Milch $10^8$ bis $10^{13}$ Protoplasten pro Liter Milch enthält.

Fig.1

Fig. 2